**Europäisches Patentamt**

**European Patent Office**

**Office européen des brevets**

(19)

(11) Veröffentlichungsnummer: **0 066 293**
**B1**

(12) **EUROPÄISCHE PATENTSCHRIFT**

(45) Veröffentlichungstag der Patentschrift :
28.08.85

(51) Int. Cl.⁴ : **H 02 G  5/00**

(21) Anmeldenummer : **82104810.5**

(22) Anmeldetag : **02.06.82**

(54) **Sammelschienenblock.**

(30) Priorität : 03.06.81 DE 3121965

(43) Veröffentlichungstag der Anmeldung :
08.12.82 Patentblatt 82/49

(45) Bekanntmachung des Hinweises auf die Patenterteilung : 28.08.85 Patentblatt 85/35

(84) Benannte Vertragsstaaten :
**AT BE CH FR GB IT LI NL SE**

(56) Entgegenhaltungen :
DE-A- 2 600 805
DE-A- 2 653 350
FR-A- 2 295 595

(73) Patentinhaber : BROWN, BOVERI & CIE Aktiengesellschaft
**Kallstadter Strasse 1**
**D-6800 Mannheim 31 (DE)**

(72) Erfinder : **Schmidt, Alfred**
**Unterer Erbsenbach 1**
**D-6124 Beerfelden-Gammelsbach (DE)**

(74) Vertreter : **Kempe, Wolfgang, Dr. et al**
**c/o Brown, Boveri & Cie AG Postfach 351**
**D-6800 Mannheim 1 (DE)**

## Beschreibung

Die Erfindung bezieht sich auf einen Sammelschienenblock zur Verbindung gleichphasiger aneinandergereihter Installationsgeräte für Mehrphasenstromkreise, bei dem die einzelnen, eine Kunststoffumhüllung zur Isolierung aufweisenden Sammelschienen mit daran angeformten, quer zur Längserstreckung der Sammelschienen verlaufenden, abgewinkelten Anschlußlaschen mit einem geschlitzten Anschlußbereich zum Anschluß des Sammelschienenblockes an den Installationsgeräten versehen ist, wobei die Kunststoffumhüllung je zweier benachbarter Sammelschienen je durch einen Luftspalt getrennt und mittels eines Quersteges zur Bildung einer Einheit miteinander verbunden sind.

Sammelschienenblöcke dieser Art sind in mannigfachen Ausführungsformen bekanntgeworden. Insbesondere haben Sammelschienenblöcke, bei denen die einzelnen Verbindungsschienen in ein Mehrkammerisolierprofil eingesetzt sind, wie es beispielsweise durch das DE-GM 78 06 981 beschrieben wird, große Verbreitung gefunden.

Ein Mehrkammerisolierprofil hat jedoch den Nachteil, daß die Sammelschienen nicht allseits durch Isoliermaterial umhüllt sind, sondern lediglich in Kammern des Isolierprofils eingelegt sind. Da sich in den Kammern bevorzugt Schmutz und Staub verfängt, besteht die Gefahr, daß sich zwischen Schienen verschiedenen Potentials entlang der Kammerwände Kriechströme ausbilden, wodurch die Spannungsfestigkeit des Sammelschienenblocks herabgesetzt wird. Zur Vermeidung solcher Kriechströme müssen die Kammerränder relativ hoch über die Sammelschienen hinausgezogen werden, was zu relativ großen Abmessungen des Sammelschienenblockes führt. Neueste internationale Richtlinien fordern daher, daß in Zukunft keine blanken stromführenden Teile in den Anschlußräumen von Verteilungen etc. mehr installiert werden.

Ferner ist durch das DE-GM 72 22 786 eine Vorrichtung aus Sammelschienen bekanntgeworden, bei der gemäß einer Ausführungsform die mittlere von drei Sammelschienen von einem U-förmigen Isolierprofil umfaßt ist und gemeinsam mit den beiden äußeren Sammelschienen mit Kunststoff umspritzt bzw. umgossen ist. Auf diese Weise ist gewährleistet, daß die einzelnen Sammelschienen gegeneinander und nach außen hin angeordnet sind. Lediglich die Anschlußlaschen ragen aus dem so gebildeten Isolierstoffblock heraus.

Beim Ablängen eines solchen Sammelschienenblockes besteht jedoch die Gefahr, daß das Material der Sammelschienen über die Isolation hinweg verschmiert wird und Kurzschlußbrücken bildet bzw. die Spannungsfestigkeit des Sammelschienenblockes an der Schnittstelle herabsetzt. Darüberhinaus hat eine solche Lösung, die keine trennenden Luftspalte zwischen den Sammelschienen vorsieht, einen hohen Kunststoffverbrauch zur Folge.

Ein Sammelschienenblock der eingangs genannten Art ist aus der DE-OS 26 00 805 bekanntgeworden. Die Umhüllung der einzelnen Sammelschienen ist nach einer Seite hin offen und aus dieser offenen Seite ragen die Anschlußfahnen, die mit den einzelnen Sammelschienen einstückig verbunden sind, heraus. Die Kunststoffumhüllungen sind also in Form von Taschen ausgebildet, die in Abstand zueinander angeordnet sind und die zwischen sich einen Luftspalt bilden. Die einzelnen Luftspalte sind jeweils mittels eine Verbindungswand bildenden Querstegen verbunden ; die Querstege verlaufen über die gesamte Länge des Sammelschienenblockes.

Bei dieser Anordnung besteht das Problem, daß die Steifigkeit des Sammelschienenblockes nicht gewährleistet ist und daß darüberhinaus auch die einzelnen Anschlußfahnen nicht isoliert sind. Gewisse Vorschriften, die sich mit dem Problem des Berührungsschutzes befassen, werden durch den bekannten Sammelschienenblock nicht erfüllt.

Aufgabe der Erfindung ist es, einen Sammelschienenblock der eingangs genannten Art zu schaffen, der den internationalen Richtlinien weitgehend entspricht, einen verhältnismäßig geringen Kunststoffanteil aufweist und dessen Stabilität erheblich vergrößert ist.

Diese Aufgabe wird erfindungsgemäß dadurch gelöst, daß die Kunststoffumhüllung die einzelnen Sammelschienen allseits umgibt, daß die Anschlußlaschen bis auf den Anschlußbereich ebenfalls allseits umhüllt sind und daß diejenigen Anschlußfahnen, die andere Sammelschienen überqueren, mit ihrer Umhüllung einen außerhalb des unmittelbaren Luftspaltes befindlichen Quersteg bildet, wobei die Umhüllung dieser Anschlußfahnen mit den Kunststoffumhüllungen der überquerten Sammelschienen über je eine Kunststoffrippe fest und einstückig verbunden ist.

Eine weitere Ausgestaltung der Erfindung kann darin bestehen, daß zusätzlich wenigstens im Bereich derjenigen Anschlußfahne, die andere Sammelschienen nicht überquert, ein die Kunststoffumhüllungen der anderen Sammelschienen übergreifender und mit diesen einstückig verbundener weiterer Quersteg angeformt ist.

Der erfindungsgemäße Sammelschienenblock vereinigt die Vorteile der bekannten Sammelschienenblöcke mit zwischen den einzelnen Sammelschienen angeordneten Luftspalten mit dem besonderen Vorteil, daß die einzelnen Anschlußfahnen bis auf relativ kleine Bereiche, die mit den Installationsgeräten kontaktiert werden, isoliert sind, so daß den Vorschriften der Berührungssicherheit damit Rechnung getragen ist. Ferner wird durch die mechanische Verbindung der Anschlußfahnen mit den einzelnen Kunststoffumhüllungen über die Umhüllung der Anschlußfahne selbst eine erhebliche Steigerung der mechanischen Stabilität jedes Sammelschienenblockes erreicht. Dadurch, daß außer der Halterung bzw. der Verbindung der Kunststoffumhüllung der einen, allen anderen Sammelschienen überdeckenden Anschlußfahne gemäß kennzeichnendem Teil des Anspruches 2 noch ein weiterer Quersteg vorgesehen ist, wird die mechanische Stabilität zusätzlich noch erheblich gesteigert.

Eine derartige Lösung ist auch der FR-PS 22 95 595 nicht zu entnehmen. Dort ist das Sammelschienengehäuse aus zwei Gehäuseteilen zusammengesetzt, einem unteren, das an einer Grundplatte befestigbar ist und mehrere nebeneinander angeordnete Taschen aufweist, und einem Gehäuseoberteil, das die einzelnen Taschen nach oben hin abdeckt. Die Anschlußfahnen selbst, die aus dem Gehäuseoberteil herausragen, sind aber für sich nicht isoliert.

Die Sammelschiene gemäß der DE-OS 26 53 350 ist für elektronische Baugruppen gedacht und mit Sammelschienenblöcken, die zur phasenweisen Verbindung mehrerer nebeneinander angeordneter Installationsgeräte gedacht sind, nicht vergleichbar.

In vorteilhafter Weise ist der Sammelschienenblock als Extrudionsprofil mit eingelassenen Sammelschienen bzw. als mit Kunststoff umspritztes Sammelschienensystem ausgebildet.

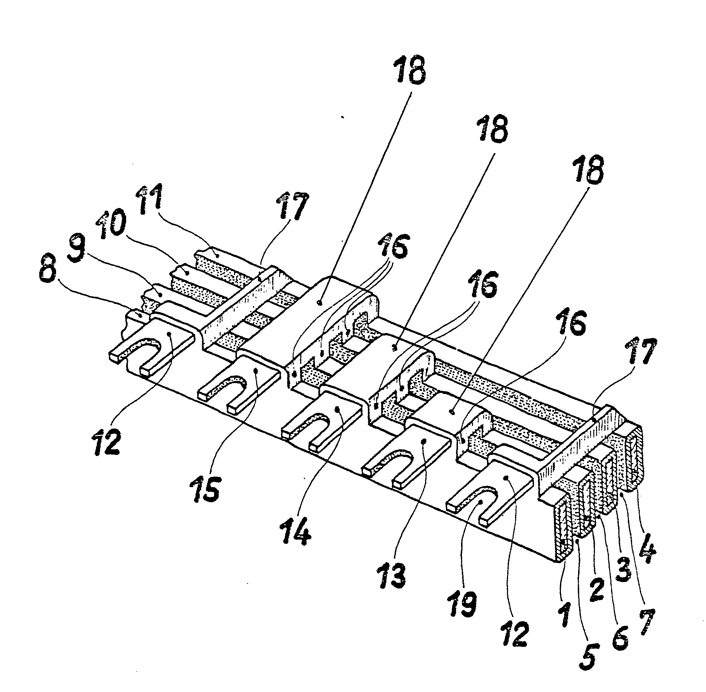

Anhand der Zeichnung, in der ein Ausführungsbeispiel der Erfindung gezeigt ist, sollen die Erfindung sowie weitere vorteilhafte Ausgestaltungen und Weiterbildungen näher erläutert werden.

Die Figur zeigt einen Sammelschienenblock, der vier mit Kunststoff umhüllte Sammelschienen 1, 2, 3, 4 enthält. Zwischen jeweils zwei Sammelschienen 1, 2, 3, 4 befindet sich ein durchgehender Luftspalt 5, 6, 7. Die Sammelschienen 1, 2, 3, 4 sind als Flachstäbe ausgebildet, die parallel nebeneinander und auf gleicher Höhe verlaufen. Die Flachseiten der Sammelschienen 1, 2, 3, 4 sind dabei einander zugewandt.

Aus den — gemäß der Figur — oberen Schmalseiten 8, 9, 10, 11 der Sammelschienen 1, 2, 3, 4, die in einer Ebene liegen, treten in regelmäßigen Abständen Anschlußlaschen 12, 13, 14, 15 aus, die in geringem Abstand oberhalb der Schmalseitenebene rechtwinkelig, quer zu der Sammelschienenrichtung abgewinkelt sind. Die freien Enden der abgewinkelten Anschlußlaschen 12, 13, 14, 15 weisen je einen Schlitz 19 auf, in die die Anschlußklemmen der nicht dargestellten Installationsgeräte eingeführt werden können. Die freien Enden der Anschlußlaschen 12, 13, 14, 15 enden in einer Fluchtlinie und ermöglichen so den Anschluß des Sammelschienenblockes an nebeneinander angeordnete Installationsgeräte.

Die Anschlußlaschen 12, 13, 14, 15 sind mit Ausnahme der Anschlußflächen allseits mit Kunststoff umhüllt. Jede der Anschlußlaschen 13, 14, 15 stützt sich durch angeformte Kunststoffrippen 16 auf jeweils den umhüllten Sammelschienen ab, die sie überragt. So trägt beispielsweise die Anschlußlasche mit der Bezugsziffer 15, die elektrisch mit der Sammelschiene 4 verbunden ist, drei Kunststoffrippen 16, die an die Kunststoffumhüllungen der Sammelschienen 1, 2, 3, angeformt sind und so die vier Sammelschienen 1, 2, 3, 4 zu einer mechanischen Einheit verbinden.

Der abgewinkelte Bereich der Anschlußlasche 12 trägt keine Kunststoffrippe, da die Anschlußlasche 12 keine Sammelschiene überragt. Um auch in dem Längsabschnitt des Sammelschienenblockes, in dem sich diese Anschlußlasche 12 befindet einen ausreichenden mechanischen Zusammenhalt der einzelnen Sammelschienen 1, 2, 3, 4 zu gewährleisten, sind die Sammelschienen 1, 2, 3, 4 durch einen sie gemeinsam überragenden Quersteg 17 miteinander verbunden.

Dieser Quersteg 17 besteht aus Kunststoff und ist an die Kunststoffumhüllungen der Sammelschienen 1, 2, 3, 4 angeformt.

## Patentansprüche

1. Sammelschienenblock zur Verbindung gleichphasiger aneinandergereihter Installationsgeräte für Mehrphasenstromkreise, bei dem die einzelnen, eine Kunststoffumhüllung zur Isolierung aufweisenden Sammelschienen (1, 2, 3, 4) mit daran angeformten, quer zur Längserstreckung der Sammelschienen verlaufenden, abgewinkelten Anschlußlaschen (12, 13, 14, 15) mit einem geschlitzten Anschlußbereich zum Anschluß des Sammelschienenblockes an den Installationsgeräten versehen ist, wobei die Kunststoffumhüllung je zweier benachbarter Sammelschienen (1, 2, 3, 4) je durch einen Luftspalt (5, 6, 7) getrennt und mittels eines Quersteges zur Bildung einer Einheit miteinander verbunden sind, dadurch gekennzeichnet, daß die Kunststoffumhüllung die einzelnen Sammelschienen (1, 2, 3, 4) allseits umgibt, daß die Anschlußlaschen (12, 13, 14, 15) bis auf den Anschlußbereich ebenfalls allseits umhüllt sind und daß diejenigen Anschlußfahnen (15), die andere Sammelschienen (1, 2, 3) überqueren, mit ihrer Umhüllung einen außerhalb des unmittelbaren Luftspaltes (5, 6, 7) befindlichen Quersteg (18) bilden, wobei die Umhüllung dieser Anschlußfahnen mit den Kunststoffumhüllungen der überquerten Sammelschienen (1, 2, 3, 4) über je eine Kunststoffrippe (16) fest und einstückig verbunden ist.

2. Sammelschienenblock nach Anspruch 1, dadurch gekennzeichnet, daß zusätzlich wenigstens im Bereich derjenigen Anschlußfahne (12), die andere Sammelschienen (2, 3, 4) nicht überquert, ein die Kunststoffumhüllungen der anderen Sammelschienen übergreifender und mit diesen einstückig verbundener weiterer Quersteg (17) angeformt ist.

## Claims

1. Bus bar block for connecting installation implements, of identical phase and arranged in series, for multi-phase circuits, in which block the individual bus bars (1, 2, 3, 4) provided with a sheath of synthetic material for insulation, comprising angled connection lugs (12, 13, 14, 15), which are moulded onto these bus bars and extend transversely to the longitudinal extent of the bus bars, having a slotted connecting area for connecting the bus bar block to the installation implements, the sheath of synthetic material of each two adjacent bus bars (1, 2, 3, 4) each being separated by an air gap (5, 6, 7) and joined to each other by means of a cross-land for forming one unit, characterised in that the sheath of synthetic material surrounds the individual bus bars (1, 2, 3, 4) on all sides, that the connection lugs (12, 13, 14, 15) are also sheathed on all sides, apart from the connecting area, and that the connection lugs (15) crossing other bus bars (1, 2, 3) form with their sheath a cross-land (18) which is located outside the immediate air gap (5, 6, 7), the sheath of these connection lugs being joined solidly and of one piece via one rib (16) of synthetic material each with the sheaths of synthetic material of the bus bars (1, 2, 3, 4) crossed.

2. Bus bar block according to Claim 1, characterised in that additionally, at least in the area of the connection lug (12) which does not cross other bus bars (2, 3, 4), a further cross-land (17) is moulded on which overlaps the sheaths of synthetic material of the other bus bars and is joined to these in one piece.

**Revendications**

1. Ensemble de barres collectrices destinées à relier des appareils d'installation de même phase arrangés ensemble pour des circuits de courant polyphasé, dans lequel les barres collectrices individuelles (1, 2, 3, 4) présentent une enveloppe de matière plastique pour l'isolement sont munies de languettes de raccordement (12, 13, 14, 15) repliées et rapportées sur elles et s'étendant transversalement par rapport à la dimension longitudinale des barres collectrices, les languettes ayant une zone de raccordement fendue pour relier l'ensemble de barres collectrices aux appareils de l'installation ; les enveloppes en matière plastique respectives de deux barres collectrices voisines (1, 2, 3, 4) étant séparées par un entrefer (5, 6, 7) et étant réunies l'une à l'autre pour former un ensemble au moyen d'un élément transversal, ensemble caractérisé en ce que l'enveloppe de matière plastique entoure de tous côtés les barres collectrices individuelles (1, 2, 3, 4), en ce que les languettes de raccordement (12, 13, 14, 15) sont également entourées de tous côtés jusqu'à la zone de raccordement et en ce que les languettes de raccordement (15) qui traversent d'autres barres collectrices (1, 2, 3) forment avec leur enveloppe un élément transversal (18) se trouvant en dehors de l'entrefer immédiat (5, 6, 7), l'enveloppe de ces languettes de raccordement étant alors reliée de façon fixe et en une seule pièce aux enveloppes de matière plastique des barres collectrices traversées (1, 2, 3, 4) par l'intermédiaire d'une nervure respective en matière plastique (16).

2. Ensemble de barres collectrices selon la revendication 1, caractérisé en ce que, en plus et au moins dans la zone de la languette de raccordement (12) qui ne traverse pas d'autres barres collectrices (2, 3, 4), est disposé un autre élément transversal (17) empiétant sur les enveloppes de matière plastique des autres barres collectrices et relié d'une seule pièce avec celles-ci.